Europäisches Patentamt

(19) European Patent Office

Office européen des brevets

(11) Publication number: **0 076 537**
A1

## (12) EUROPEAN PATENT APPLICATION

(21) Application number: 82201150.8

(22) Date of filing: 16.09.82

(51) Int. Cl.³: **C 02 F 3/28**
C 02 F 11/00, C 02 F 1/52

(30) Priority: 06.10.81 NL 8104541

(43) Date of publication of application:
13.04.83 Bulletin 83/15

(84) Designated Contracting States:
AT BE CH DE FR GB IT LI LU NL SE

(71) Applicant: MACHINEFABRIEK G.J. NIJHUIS B.V.
Parallelweg 4 Postbus 102
NL-7100 AC Winterswijk(NL)

(72) Inventor: Nijhuis, Gerrit Jan
Rusthuisstraat 10
NL-7101 JH Winterswijk(NL)

(74) Representative: van der Beek, George Frans et al,
Nederlandsch Octrooibureau Johan de Wittlaan 15 P.O.
Box 29720
NL-2502 LS Den Haag(NL)

(54) A method for the anaerobic fermentation of waste water.

(57) The invention relates to a process for the anaerobic fermentation of waste water, wherein a sludge, that has been obtained by coagulating and separating difficultly settlable, colloidal and dissolved organic materials of waste water – particularly of waste water of abattoirs – by means of addition of known coagulating agents is fermented.

EP 0 076 537 A1

0076537

BO.30358

A method for the anaerobic fermentation of waste water.

It is known that waste water, particularly waste water of abattoirs, may be fermented anaerobically, but the efficiency of such an anaerobic fermentation might be increased considerably, if instead of the whole quantity of waste water, just a sludge having an increased concentration of dry solids might be fermented anaerobically.

According to a known and generally used method to obtain such a sludge that has an increased percentage of solids the difficultly settlable, colloidal and dissolved organic materials present in the waste water are physically coagulated by means of coagulating agents.

A sludge that has been obtained by subjecting waste water of an abattoir to a physical coagulation has e.g. the following composition:

| | |
|---|---|
| Dry solids | 7 % |
| COD | $\pm$ 1.5 x solids |
| Ash | 220 g/kg solids |
| Crude proteins | 420 g/kg solids |
| Crude fatty materials | 270 g/kg solids |
| Crude cellulose | 20 g/kg solids |
| Remaining carbohydrates | 70 g/kg solids |
| $Fe^{+++}$ or $Al^{+++}$ | 5000 ppm. |

Consequently such a sludge contains a high percentage of easily degradable organic materials and large numbers of bacteria. At storage it will decay spontaneously, due to which a stench annoyance and degradation of the microbiological quality of the sludge occurs. Principally, it might be worked up in a destructor but this would be remunerative only in case it would contain at least 35 weight percent dry solids. Actually it contains just 1 to 15 weight percent dry solids. Since only industrial economical unattractive dehydration methods, such as sieve band pressing, are available to increase the percentage of dry solids, usually the sludge is applied as a manure on the land or it is used as animal feed. Also said applications of the sludge may not be used unlimitedly, since the quantities that become available increase continuously, the above applications may not be extended unlimitedly and for some applications the percentage of heavy metals is too high.

Since many inorganic coagulating agents, such as salts of aluminium and iron, promote the germicidal action of antiseptica, and $FeCl_3$ as well as $Al_2(SO_4)_3$ are considered as toxic salts, while hydroxides are more toxic than salts, the risk of a detrimental influence on the anoaerobic fermentation due to the presence of metal compounds in a sludge that has been subjected to a physical coagulation, was considered to be very likely. (Vide "Bacterial Chemistry and Physiology" by J.R. Porter 251-260 (1956)).

However, surprisingly it was found, that a sludge, obtained by coagulating and separating difficultly settlable colloidal and dissolved organic materials of waste water - particularly waste water of abattoirs - by means of addition of coagulating agents, may be fermented anaerobically very well.

Due to said fermentation the volume of the sludge is reduced and a product having a high percentage of dry solids is obtained, while the pathogeneous action, if any, is reduced considerably due to the decease of the bacteria flora present. If desired, the heavy metals present in the sludge may be stripped therefrom, by washing said sludge with a liquid having the capacity to dissolve heavy metals.

Preferably the anaerobic fermentation is continued till the COD-value is up to 25 % of its original value and then, if required, the sludge is dehydrated according to methods known per se till the percentage of dry solids amounts at least 20 weight %.

Consequently the anaerobic fermentation is continued till a reduction of the original COD-value of at least 75 % has been achieved.

At the washing operation, if any, the heavy metal ions that have been added in order to promote the required coagulation, as well as other ions of heavy metals are removed.

After dehydration and before the washing operation 30 weight percent of said sludge may consist of iron- or aluminium compounds that have been added to promote the coagulation. Converted into hydroxides evidently said percentage is still higher.

Preferably the sludge is washed with hydrochlorid acid, particularly technical grade hydrochloric acid (35 weight percent = .12,4 N), wherein the heavy metals present are recovered in a dissolved form i.c.as chlorides (silver, mercury and lead excluded).

The sludge that has been acidified by means of the addition of acid, may be neutralised with effluent of the anaerobic fermentation, that contains a lot of ammonia since the C:N-ratio in the sludge is too low.

The fermented and dehydrated sludge is substantially sterile, frequently substantially free of heavy metals and may be used as such for manuring purposes. In case such a mass is not used immediately or is worked up in a destructor, it may be stored since it is stenchfree, spadeproof and fermented completely.

The methane formed contains small amounts of carbon dioxide and hydrogen, and may be used to heat the reactor wherein the anaerobic fermentation takes place (said fermentation may even be performed at 50 to 60°C), so that the fermentation may be carried out at an increased temperature, preferably 30 to 45°C. However, the methane may be used also for other heating purposes in the plant, e.g. for singeing pigs, whereafter the stack losses may be used for heating up the reactor.

EXAMPLE 1 (discontinuous operation)

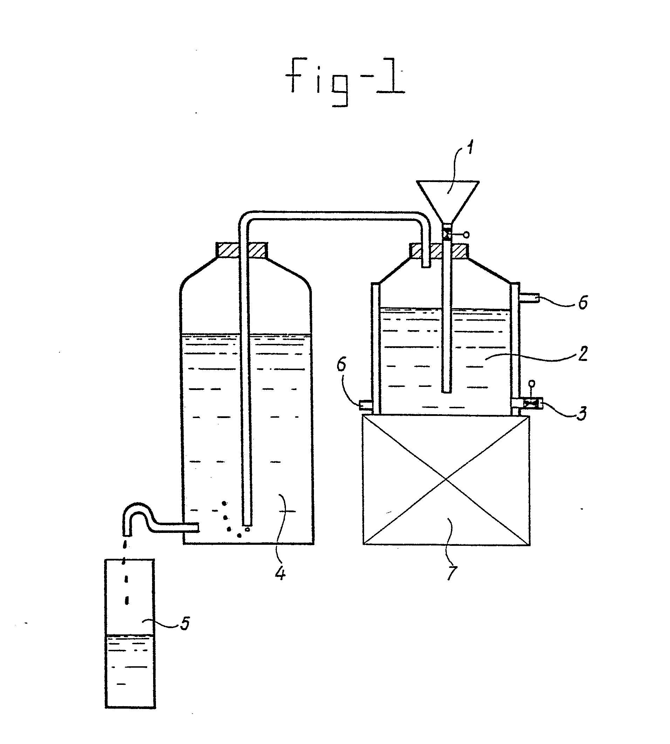

The test was performed in three jacketed reactors having a capacity of 650 ml according to figure 1 wherein the symbols 1 to and inclusive 7 have the following meaning:

| 1 | feed | 5 | liquid receptor |
|---|------|---|-----------------|
| 2 | fermentation flask | 6 | hot water inlet/outlet |
| 3 | outlet | 7 | magnetic stirrer |
| 4 | Mariotte flask | | |

4

Water having a temperature of 34°C was fed through the jacketed walls in order to maintain the optimum fermentation temperature in the reactors.

The contents of said reactors was stirred by means of magnetic stirrers. Said stirrers were switched on only just before and just after feeding respectively draining off of sludge.

The biogas produced was collected in a Mariotte flask, that was filled with a concentrated sodium hydroxide solution. The amount of liquid pushed out therefrom was an indication for the volume of the methane gas produced (s.m. = 1g/ml).

At the beginning of the test the reactors were filled with 500 g. of drain-off sludge of an upflow reactor.

Once per 48 hours the reactors were fed with a flotation sludge. Simultaneously an equal volume of the blend was drained off.

The amount of flotation sludge was determined per reactor at a space load of respectively 5, 7.5 and 10 kg. $COD/m^3_r.d.$

When a steady-state had been reached (constant gas production, pH) the fermentability was calculated from the measure results of the three reactors.

The results of the measurements during the test have been collected in table A.

## T A B L E   A

| Reactor | | 1 | 2 | 3 |
|---|---|---|---|---|
| Volume influent | g. of sludge/d | 25 | 37,5 | 50 |
| Influent COD totally | g/l | 103.7 | 103.7 | 103.7 |
| COD supplied* | g/l | 7.7 | 7.7 | 7.7 |
| VFA | meq/l | 28.9 | 28.9 | 28.9 |
| Effluent COD totally | g/l | 44.7 | 52.2 | 49.5 |
| COD supplied | g/l | 6.0 | 5.0 | 5.6 |
| VFA | meq/l | 26.9 | 33 | 31.9 |
| pH | | 7.6 | 7.4 | 7.4 |
| Average $CH_4$ production Ml/d | | 658 | 625 | 793 |

* COD supernatans; after centrifugation, 10 min. at 10.000 g.

The volume of the fermenting mass in each reactor amounted 0.5 Ltd. Calculation of the following parameters is now possible;

- the organic volume-(space) load. Vb;

  kg of substrate per day per liter fermenting mass supplied.

- the hydraulic residence time. $\Theta h$ in the reactor.

- the productivity. Pm; The volume of methane gas produced per liter reactor per day.

- the gas production G.; The volume of methane gas produced per gram substrate offered (Ga.) or fermented (Gv.).

- the fermentation yield R; The percent of substrate that is degraded and/or gasified during fermentation.

The results of the calculations have been collected in Table B.

<u>T A B L E   B</u>

| Reactor | | 1 | 2 | 3 |
|---|---|---|---|---|
| Vb | g. $COD_{tot}$ | 5.2 | 7.8 | 10.4 |
| $\Theta h$ | days | 20 | 13.3 | 10 |
| Pm | 1 $CH_4/L_r$.d. | 1.3 | 1.3 | 1.6 |
| Ga | 1 $CH_4$/g.$COD_{tot}$ | 0.25 | 0.17 | 0.15 |
| Gv | 1 $CH_4$/g.$COD_{tot}$ | 0.44 | 0.34 | 0.30 |
| R on the basis of $COD_{tot}$% | | 56.9 | 49.7 | 52.3 |
| R on the basis of COD-removed by $CH_4$ % | | 66.5 | 45.2 | 39.9 |

$$1 \text{ l } CH_4 \text{ at } 20°C = \frac{64}{22,4} \times \frac{273}{293} = 2.66 \text{ g. COD}$$

The period between two feeds was sufficiently short to approximate the kinetics of a continuous process.

At a continuous supply of organic material to a reactor, the quantity degraded is proportional to the percentage of substrate in the reactor and its residence time:

X infl. — X effl. = k. X infl. θ, k = biodegradation-constant, from which follows: R = 1. θh.

At $V_b$ = 5,2 the yield on the basis of $CH_4$-production is higher than on the basis of the COD-reduction measured.

The drain-off sludge that was used to start the test contained 33 weight percent caught material. Fermentation of said material is the reason for the higher $CH_4$-yield.

The COD-yield at $V_b$ = 7.8 is smaller than at $V_b$ = 10.4. This is an indication for a reduced acitivity in reactor 2. This might be explained by the fact that at draining off and at supplying new sludge too much bacterial material has been drained off.

Said supposition is strengthened, by the fact that only said reactor showed a deblending into a reasonable clear upper layer and a dark mass in the lower part of the reactor in the period that no blending took place.

The methane productivity is of an average level (0.25-0.15 1 $CH_4$/g. $COD_a$, at a flotation sludge residence time of from 20 to 10 days).

The percentage of volatile fatty acid remains constant and so the pH does due to the high percentage of $NH_4^+$.

At an hydraulic residence time of 10 days the COD-yield amounted 52.3. Consequently, the time required to gasify half of the organic material is less than 10 days.

EXAMPLE II(test in up-flow reactor)

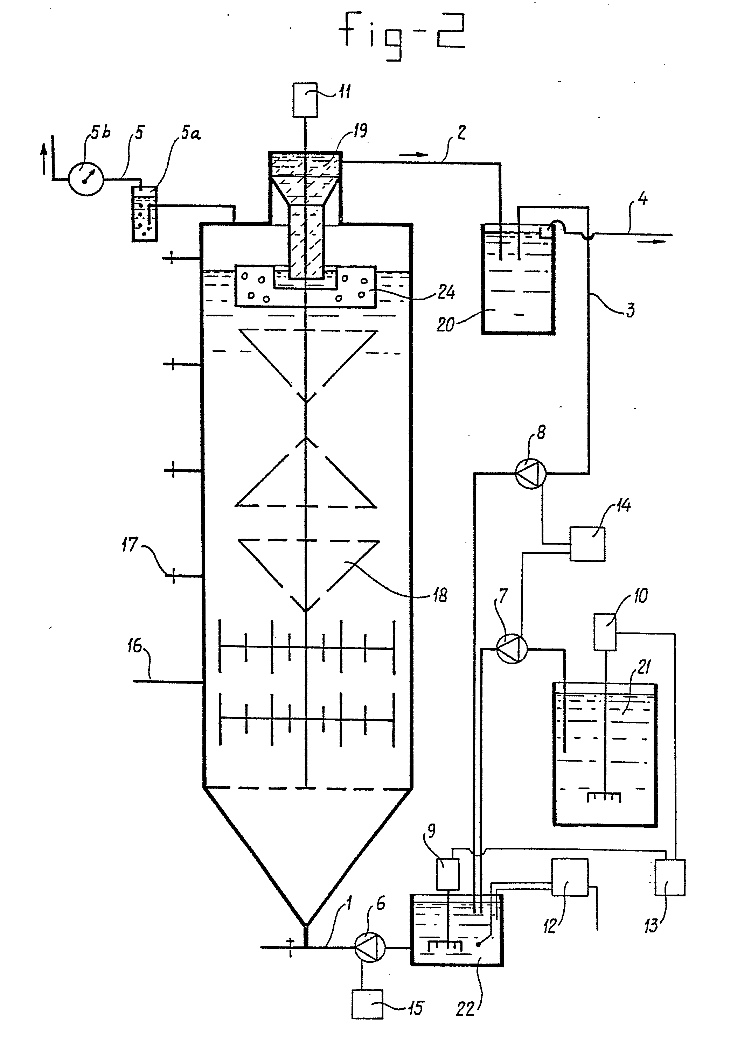

An up-flow reactor having an effective capacity of 60 Ltd. (vide figure 2, wherein

1. Influent

2. Effluent

3. Return effluent

4. Drain off effluent

5. Gas; a) water seal, b) gas meter

6. Blend influent pump

7. Influent pump

8. Return effluent pump

9. Stirrer blending vessel influent

10. Stirrer influent stock

11. Stirrer reactor

12. pH measuring and control unit

13. Control unit stirrers 9 + 10

14. Control unit pumps 7 + 8

15. Control unit pump 6

16. Temperature meter

17. Sample draw off point

18. Gas conductor

19. Settle space for sludge

20. Effluent stock vessel

21. Influent stock vessel

22. Mix vessel influent

23. Effluent pump

24. Floating layer breaker stand for) was set up in a space having a constant temperature of 33°C. Drain off sludge of an up-flow reactor of a sugar plant was used as the graft material. The dry solids of the drain-off sludge amounted 70 g/l.

In the first 39 days a load of 3.1 kg $COD/m^3_r$.day was maintained. The hydraulic residence time amounted 3.4 days and was achieved by recycling the effluent (recycling ratio 8).

From day 39 till day 60 the COD load amounted 5.2 kg $COD/m^3_r$ at a hydraulic residence time of 3.62 and 1.88 days.

The flotation sludge was supplied 1 x per 7 days and was stored at a temperature of 4°C. Before use the sludge was sieved over a sieve having meshes of 55 mm in order to remove hairs and other coarse particles. The liquid flowed through a funnel and a distributing plate in the lower part of the reactor where the active sludge was present already. The upper part of the reactor contained after-settling means (19) wherein the floating sludge, if any, could settle and the effluent could leave the reactor. The gas was separated by means of gas conductors (18) and was drained off via a water seal (5a) to a wet gas meter (5b).

In order to avoid damage of the structure of the sludge material the sludge was not stirred.

8 0076537

The test has been carried out for 75 days.

Day 1 to and inclusive day 11 was considered as an initial period. The production of gas started very soon and from day 11 the $CH_4$-yield exceeded 80%.

In the period from day 11 to day 32 the gas production increased gradually.

In the periode from day 32 to day 39 due to technical troubles, a small amount of flotation sludge was supplied. Thus the gas production decreased and the $CH_4$-yield passed 100% due to fermentation of material caught already before.

Two periods having different space loads, and a constant fermentation may be indicated.

The first period is from day 11 to day 32 having $V_b$ = 3.1. And the second period is from day 39 to day 60 having a $V_b$ = 5.2.

Both periods are characterized by high COD yield, respectively 98.9 and 97.7 %

This is corralated with a very high COD in the influent.

The calculation of the specfic drain off sludge production was carried out on the following basis.

Specific drain off sludge production =

$$100\% - \% \; COD_{effl.} - \% \; COD_{gas}$$
$$Rczv - RCH_4.$$

The results of the fermentation experiments using flotating sludge in the up-flow reactor are collected in Tables C and D.

## TABLE C

| Period (day Nr.) | 11-32 | 39-60 |
|---|---|---|
| Process conditions: | | |
| Temperature $^{o}C$ | 33 | 33 |
| Load kg $COD/m^3_r$. | 3,11 | 5,21 |
| $\theta h$ hydraulic residence time (day) | 3,40 | 3,62 |
| Residence time flotation sludge (day) | 27,6 | 18,7 |
| Recycling ratio | 8,1 | 5,2 |
| Results: | | |
| Gas production (1 gas/day) | 76,1 | 95,1 |
| Gas composition (% $CH_4$) | 77,5 | 77,5 |
| Ga (1 $CH_4$/g $COD_{tot}$) | 0,317 | 0,24 |
| Effluent: | | |
| pH | 8,1 | 8,05 |
| $COD_{tot}$(mg.1) | 900 | 1880 |
| Volatile fatty acids (meq/1) | 6,2 | 19,3 |
| $NH_4^+/NH_3$-N | 1200 | 2000 |
| Dry solids % | 0,125 | 0,285 |
| Ash in % of dry solids | 90,15 | 44,25 |
| Purification yield: | | |
| $CH_4$-COD % | 83,4 | 64,2 |
| $COD._{tot}$.analysis effluent % | 98,9 | 97,7 |
| Specific drain off sludge production in g. $COD_{tot}$/g. $COD_{tot}$A % | 15,5 | 33,5 |

### TABLE D

| Flotation sludge: | | |
|---|---|---|
| $COD._{tot}$ (kg/l) | 87300 | 99300 |
| Dry solids % | 6,6 | 6,2 |
| Ash in dry solids % | 24,9 | 23,3 |
| Volatile fatty acids (meq/l) | 18,2 | 17,3 |
| tot-N (mg/l) | 4520 | - |
| $NH_4^+/NH_3$  N (mg/l) | 580 | 800 |
| Drain off sludge: | | |
| Dry solids % | 7,62[*] | 7,37 (day 53) |
| Ash % in dry solids | 22,3 | 26,7 |
| Volatile fatty acids (meq/l) | 7,9 | 21,1 |

[*] It relates to an average over the whole period.

The volume reduction of the flotation sludge expressed in kg drain-off sludge production per kg flotation sludge supplied, may be calculated as follows:

per kg flotation sludge A kg drain-off sludge is formed, the volume reduction is (1 - A) x 100 %, and

$$A = \frac{kg\ COD}{kg\ flotation\ sludge} \times specif.\ drain\text{-}off\ sludge\ production\ x$$

$$\frac{2/3\ kg\ dry\ solids}{kg\ drain\text{-}off\ sludge\ COD} \times \frac{1}{\%\ dry\ solids\ drain\text{-}off\ sludge}$$

In the first period the reduction amounted 88% and in the second period the reduction amounted 70%. Also the gas production decreased from 317 to 240 1. $CH_4$ per kg supplied total COD.

Microbiological counts in the flotation sludge and in the drain off sludge carried out on Enterobacteriaceae and Salmonella show that said bacteria decease partially during the stabilization. Particularly the reduction of Salmonella, being pathogeneous, is of course very interesting (Table E).

## TABLE E

Reduction of the number of bacteria during the fermentation of flotation sludge in number/g.

|  | Influent | Drain off sludge | Nutrient |
|---|---|---|---|
| Enterobacteriaceae | $8,8 \times 10^6$ | 1000 | V.R.B.G. |
| General aerobic count | $6,2 \times 10^6$ | $5,1 \times 10^6$ | T.S.B.A. |
| Salmonella | 10 | 1 | B.G.F.R. |

## CLAIMS

1. A process for the anaerobic fermentation of waste water, characterised in performing said fermentation with a sludge, that has been obtained by coagulating and separating difficultly settlable, colloidal and dissolved organic materials of waste water by means of addition of known coagulating agents.

2. A process according to claim 1, characterised in performing the fermentation with a sludge, obtained by coagulating and separating difficultly settlable, colloidal and dissolved organic materials present in waste water of abattoirs, by means of addition of coagulating agents.

3. A process according to claim 1 or 2, characterised in performing said anaerobic fermentation in the temperature range of from 30 to 45°C.

4. A process according to claim 1 to 3, characterised in that the sludge that after fermentation is drained off from the fermentation apparatus contains 3 to 20 weight percent dry solids.

-,-,-,-,-

fig-1

2/2                    0076537

Fig-2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | C 02 F 3/28 |
| X | US-A-2 661 332 (SWIFT & COMP.) *Column 1, lines 10-14; column 3, lines 9-64* | 1,2 | C 02 F 11/00 C 02 F 1/52 |
| | --- | | |
| A | K.R.DIETRICH: "Die Abwassertechnik", 1973, A.Hüthig Verlag, pages 202-203, Chapter XVIII: "Faulverfahren für den anaeroben Abbau der organischen Schmutzstoffe", Chapter XX: "Verfahren zur Schlammbehandlung", 2nd Edition, Heidelberg (DE); *Page 198, lines 11-13; page 202, lines 11-12* | 3,4 | |
| | --- | | |
| A | F.MEINCK et al.: "Industrie-Abwässer", 4th Edition, 1968, G.Fischer Verlag, pages 396-399, Stuttgart (DE). | | TECHNICAL FIELDS SEARCHED (Int. Cl. 3) |
| | ----- | | C 02 F |

The present search report has been drawn up for all claims

| Place of search | Date of completion of the search | Examiner |
|---|---|---|
| THE HAGUE | 03-01-1983 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82